# EUROPEAN PATENT SPECIFICATION

(11) **EP 3 106 428 B1**
(45) Date of publication and mention of the grant of the patent: **03.04.2019**
(21) Application number: 15746911.5
(22) Date of filing: 09.02.2015
(51) Int. Cl.: C01B 3/38, H01M 8/0612

(54) **HYDROGEN GENERATION APPARATUS, METHOD FOR OPERATING SAME, AND FUEL CELL SYSTEM**
WASSERSTOFFERZEUGUNGSVORRICHTUNG, VERFAHREN ZUM BETRIEB DAVON UND BRENNSTOFFZELLENSYSTEM
APPAREIL DE GÉNÉRATION D'HYDROGÈNE, PROCÉDÉ POUR LE FONCTIONNEMENT DE CELUI-CI ET SYSTÈME DE PILE À COMBUSTIBLE

(30) Priority: 10.02.2014 JP 2014022961
(43) Date of publication of application: 21.12.2016
(73) Proprietor: Panasonic Intellectual Property Management Co., Ltd., Osaka-shi, Osaka 570-6207 (JP)
(72) Inventor: TAMURA, Yoshio, Osaka 540-6207 (JP); NAKAMURA, Akiko, Osaka 5406207 (JP); OZEKI, Masataka, Osaka 540-6207 (JP)
(74) Representative: Grünecker Patent- und Rechtsanwälte PartG mbB
(86) International application number: PCT/JP2015/000586
(87) International publication number: WO 2015/118889

(56) References cited:
- EP-A1- 3 178 784
- WO-A1-2008/016361
- JP-A- 2011 195 391
- JP-A- 2012 204 330
- JP-A- 2012 250 876
- JP-A- 2013 184 844
- JP-A- 2013 222 573
- US-A- 3 655 448

## Description

### TECHNICAL FIELD

The present invention relates to a hydrogen generating apparatus including a hydrodesulfurizer, an operating method of the hydrogen generating apparatus, and a fuel cell system.

### BACKGROUND ART

Hydrogen-containing gas which is used in fuel cell systems as fuel in generating electric power has not been developed as a common raw material infrastructure. Therefore, normally, the fuel cell system includes a hydrogen generating apparatus having a reformer for generating hydrogen-containing gas from natural gas or LPG (Liquefied Petroleum Gas) which is a common raw material infrastructure.

The reformer generates the hydrogen-containing gas by using a steam reforming reaction, in general. Specifically, in the steam reforming reaction, city gas, which is raw material, and steam are caused to react with each other at a high temperature of about 600°C to 700°C by using a noble metal reforming catalyst such as a Ru-based reforming catalyst or a Ni-based reforming catalyst. In this way, the reformer generates the hydrogen-containing gas including hydrogen as a main ingredient.

However, the raw material such as the city gas includes a sulfur compound. The sulfur compound is particularly a substance which poisons the reforming catalyst and a fuel cell stack catalyst. Therefore, it is necessary to remove the sulfur compound in some way.

Therefore, the fuel cell system includes the hydrogen generating apparatus which removes the sulfur compound by mixing the hydrogen-containing gas and the raw material and carrying out hydrodesulfurization through a hydrodesulfurization catalyst, for example.

Moreover, in the hydrogen generating apparatus, feed of the hydrogen-containing gas is executed in general by returning the hydrogen-containing gas generated by the reforming catalyst into a raw material feed path (hereinafter referred to as "recycling").

Specifically, as a method for recycling the hydrogen-containing gas into the raw material, an ejector is provided in the path for feeding the raw material to the hydrodesulfurization catalyst. Then, the hydrogen-containing gas is drawn by a Venturi effect by the ejector. There have been proposed hydrogen generating apparatuses for mixing the raw material and the hydrogen-containing gas for recycling by using this method (see PTL 1 and PTL 2, for example).

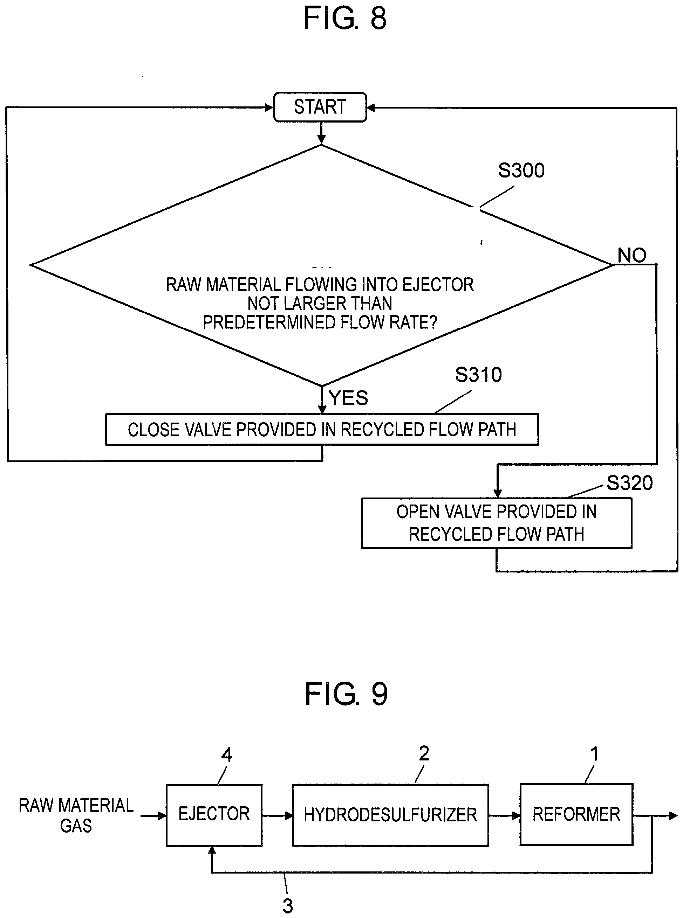

A structure of a conventional hydrogen generating apparatus is described below with reference to FIG. 9.

FIG. 9 is a schematic diagram showing an example of the structure of the conventional hydrogen generating apparatus.

As shown in Fig. 9, the conventional hydrogen generating apparatus includes hydrodesulfurizer 2, reformer 1, recycled gas flow path 3, ejector 4, and the like. Hydrodesulfurizer 2 reduces a concentration of a sulfur compound contained in raw material fed from a raw material feed path by a hydrodesulfurization reaction. Reformer 1 reforms the raw material discharged from hydrodesulfurizer 2 to generate hydrogen-containing gas. Recycled gas flow path 3 feeds a part of the hydrogen-containing gas discharged from reformer 1 to the raw material feed path. Ejector 4 is provided at a junction of the raw material feed path and recycled gas flow path 3 and draws the hydrogen-containing gas from recycled gas flow path 3 into the raw material feed path.

At this time, in the conventional hydrogen generating apparatus, because ejector 4 draws the hydrogen-containing gas from recycled gas flow path 3, it is necessary to feed the raw material at a flow rate higher than a predetermined flow rate to ejector 4.

In other words, if the flow rate of the raw material flowing into ejector 4 is lower than or equal to the predetermined flow rate, the Venturi effect at ejector 4 cannot be exerted. As a result, ejector 4 cannot draw the hydrogen-containing gas. US 3 655 448 A relates to a hydrogen generator desulfurizer employing a feedback ejector.

### Citation List

### Patent Literatures

PTL 1: Unexamined Japanese Patent Publication No. 2013-184844
PTL 2: Unexamined Japanese Patent Publication No. 2013-222573

### SUMMARY OF THE INVENTION

The present invention proposes a hydrogen generating apparatus for preventing backflow of raw material from an ejector into a recycled gas flow path.

A hydrogen generating apparatus according to the invention is defined in claim 1 and an operating method of the apparatus is defined in claim 7.

In other words, in the hydrogen generating apparatus in the present invention, a valve for preventing the raw material with a predetermined or lower flow rate from flowing into the ejector is provided in the recycled gas flow path.

With this structure, if gas cannot be caused to flow from the recycled gas flow path into the ejector because the flow rate of the raw material flowing into the ejector is low and a gas drawing force by the Venturi effect deriving from a flow of the raw material is small, the recycled gas flow path is closed by the valve. In this way, the backflow of the raw material through the recycled gas flow path is prevented.

Furthermore, as a result of hard study, the present inventors have newly found that the raw material flows back from ejector 4 through recycled gas flow path 3 and that the hydrogen generating apparatus and a device (e.g., a fuel cell) on a downstream side of the hydrogen generating apparatus are poisoned by the raw material from which a sulfur compound is not removed.

However, with the above-described structure, it is possible to prevent the backflow into recycled gas flow path 3 to prevent poisoning of the hydrogen generating apparatus and the device on the downstream side of the hydrogen generating apparatus. As a result, it is possible to achieve the hydrogen generating apparatus which is excellent in reliability and can stably operate for a long period. Further advantageous embodiments are defined in the dependent claims.

### BRIEF DESCRIPTION OF DRAWINGS

FIG. 1 is a schematic diagram showing an example of a structure of a hydrogen generating apparatus in a first example.
FIG. 2 is a schematic diagram showing an example of a structure of a hydrogen generating apparatus in a second exemplary embodiment of the present invention.
FIG. 3 is a schematic diagram showing an example of a structure of a hydrogen generating apparatus in a third exemplary embodiment of the present invention.
FIG. 4 is a flowchart showing an example of an operating method of a hydrogen generating apparatus in a fourth exemplary embodiment of the present invention.
FIG. 5 is a flowchart showing an example of an operating method of a hydrogen generating apparatus in a fifth exemplary embodiment of the present invention.
FIG. 6 is a schematic diagram showing an example of a structure of a hydrogen generating apparatus in a sixth exemplary embodiment of the present invention.
FIG. 7 is a schematic diagram showing an example of a structure of a fuel cell system in a seventh exemplary embodiment of the present invention.
FIG. 8 is a flowchart showing an example of an operating method of a hydrogen generating apparatus in an eighth exemplary embodiment of the present invention.
FIG. 9 is a schematic diagram showing an example of a structure of a conventional hydrogen generating apparatus.

### DESCRIPTION OF EMBODIMENTS

The exemplary embodiments of the present invention are described below with reference to the drawings. The present invention is not limited to the exemplary embodiments. The same structures as those in the exemplary embodiments described earlier are provided with the same reference marks and are not described in detail.

### FIRST EXAMPLE NOT PART OF THE INVENTION BUT FACILITATES UNDERSTANDING OF THE INVENTION

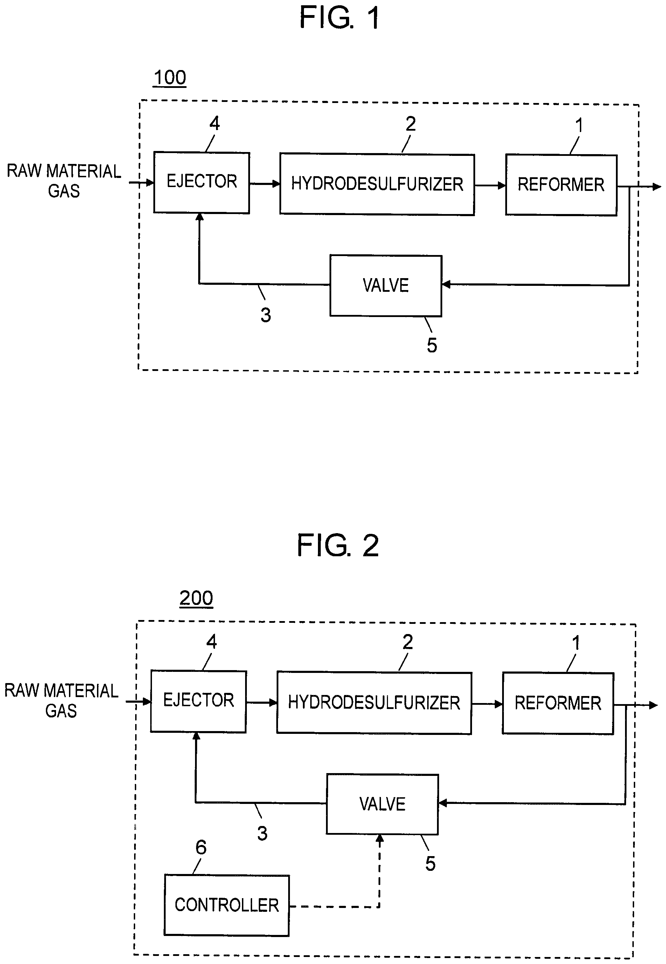

A structure of a hydrogen generating apparatus in the first example is described below with reference to FIG. 1.

FIG. 1 is a schematic diagram showing an example of the structure of the hydrogen generating apparatus in the first example.

As shown in FIG. 1, hydrogen generating apparatus 100 in the present example includes at least reformer 1, hydrodesulfurizer 2, recycled gas flow path 3, ejector 4, and valve 5.

First, reformer 1 in hydrogen generating apparatus 100 generates hydrogen-containing gas by using raw material. Specifically, in a reforming catalyst unit (not shown) in reformer 1, a reforming reaction of the raw material is executed to generate the hydrogen-containing gas. The hydrogen-containing gas may be hereinafter simply referred to as "gas".

The reforming reaction is not limited to a specific reaction and may be a steam reforming reaction, an autothermal reaction, or a partial oxidation reaction, for example.

Although not shown in FIG. 1, it is needless to say that devices necessary for each reforming reaction are suitably provided to reformer 1.

Specifically, if the reforming reaction is the steam reforming reaction, a combustor for heating the reforming catalyst unit, an evaporator for generating steam, and a water feeder for feeding water to the evaporator are provided. If the reforming reaction is the autothermal reaction, on the other hand, hydrogen generating apparatus 100 further includes an air feeder (not shown) for feeding air to reformer 1.

As the raw material, the raw material containing organic compounds formed by at least carbon and hydrogen (e.g., city gas including methane as a main ingredient, natural gas, and LPG) is used.

Next, hydrodesulfurizer 2 in hydrogen generating apparatus 100 reduces a concentration of a sulfur compound in the raw material fed to reformer 1 by a hydrodesulfurization reaction. For this purpose, a container of hydrodesulfurizer 2 is filled with a desulfurization agent for hydrodesulfurization. The desulfurization agent for the hydrodesulfurization is formed by a CoMo catalyst for converting the sulfur compound in the raw material into hydrogen sulfide and a ZnO catalyst or a CuZn catalyst which is a sulfur adsorbent provided on a downstream side for adsorption and removal of the hydrogen sulfide. The desulfurization agent for the hydrodesulfurization is not limited to the above-described structure but may be formed by only the CuZn catalyst having both of a function of converting the sulfur compound into the hydrogen sulfide and a function for adsorption of the hydrogen sulfide. In this way, it is possible to simplify the structure.

In other words, by use of the desulfurization agent, hydrodesulfurizer 2 causes the sulfur compound in the raw material to react with the hydrogen-containing gas to convert the sulfur compound into the hydrogen sulfide and then removes the hydrogen sulfide by adsorption.

Furthermore, even if the hydrogen-containing gas is not fed, the sulfur compound in the raw material can be directly and physically adsorbed on hydrodesulfurizer 2. However, if the sulfur compound is directly removed by physical adsorption, a greater amount of desulfurization agent for the hydrodesulfurization is required than when the sulfur compound is removed by adsorption after being converted into the hydrogen sulfide. Therefore, in normal use, it is common practice that the sulfur compound is converted into the hydrogen sulfide by the desulfurization agent and then removed by adsorption.

In the present example, however, the sulfur compound is removed by use of physical adsorption only at startup and shutdown of hydrogen generating apparatus 100 when the hydrogen-containing gas is not generated.

Next, recycled gas flow path 3 of hydrogen generating apparatus 100 forms a flow path for feeding a part of the hydrogen-containing gas sent out from reformer 1 to mix the hydrogen-containing gas with the raw material on an upstream side of hydrodesulfurizer 2.

At this time, a position to be connected to an upstream end of recycled gas flow path 3 is not particularly limited, if the position is at a flow path through which the hydrogen-containing gas sent out from reformer 1 flows. For example, if a CO reducer (not shown) for reducing monoxide in the hydrogen-containing gas is provided on a downstream side of reformer 1, the upstream end of recycled gas flow path 3 may be connected to a flow path between reformer 1 and the CO reducer, to a downstream side of the CO reducer, or directly to the CO reducer. Moreover, if the CO reducer includes a converter for reducing carbon monoxide by a shift reaction and a CO remover for reducing carbon monoxide by at least one of an oxidation reaction and a methanation reaction, the upstream end of recycled gas flow path 3 may be connected to a flow path between the converter and the CO remover. The upstream end of recycled gas flow path 3 may be connected to a flow path on a downstream side of a hydrogen-using device such as a fuel cell, which uses the hydrogen-containing gas.

Although hydrogen generating apparatus 100 including the CO reducer and the CO remover has been described above as an example, hydrogen generating apparatus 100 does not necessarily have to include the CO reducer and the CO remover. For example, if the device using the gas generated by hydrogen generating apparatus 100 can provide required performance, hydrogen generating apparatus 100 may not include the CO reducer and the CO remover.

Next, ejector 4 in hydrogen generating apparatus 100 is a device having a function of increasing a flow velocity of the raw material by narrowing a sectional area of a flow path through which the raw material force-fed by a raw material feeder such as a booster (not shown) flows. Ejector 4 is formed so that recycled gas flow path 3 joins a raw material feed path at a position where the flow velocity of the raw material is the highest.

In other words, ejector 4 increases the flow velocity of the raw

In other words, ejector 4 increases the flow velocity of the raw material to reduce pressure of the raw material at the position by a Venturi effect. At this time, the pressure of the raw material becomes the lowest at the position where the flow velocity of the raw material becomes the highest. Therefore, ejector 4 is normally designed so that the lowest pressure is lower than pressure on an upstream side of recycled gas flow path 3. In this way, the hydrogen-containing gas can be drawn into and flow into the raw material feed path through recycled gas flow path 3.

If the hydrogen-containing gas can flow into the raw material feed path by the Venturi effect through recycled gas flow path 3, the hydrogen-containing gas does not necessarily have to flow into the raw material feed path at the position where the flow velocity of the raw material is the highest.

Next, valve 5 in hydrogen generating apparatus 100 is provided to recycled gas flow path 3 to allow and intercept a flow of the hydrogen-containing gas sent out from reformer 1.

Valve 5 may have any structure, if valve 5 can open and close recycled gas flow path 3. For example, valve 5 may be formed by a solenoid valve which opens and closes in response to electric signals.

As described above, hydrogen generating apparatus 100 in the present example is formed.

Operation of hydrogen generating apparatus 100 in the present example is described below with reference to FIG. 1.

First, operation of hydrogen generating apparatus 100 in generation of the hydrogen-containing gas is described.

generating apparatus 100 from the booster (not shown). Then, hydrodesulfurizer 2 removes the sulfur compound contained in the raw material.

Next, the raw material from which the sulfur compound is removed by hydrodesulfurizer 2 is fed to reformer 1, and reformer 1 generates the hydrogen-containing gas.

Next, the part of the hydrogen-containing gas generated in reformer 1 is drawn by ejector 4 by the Venturi effect through recycled gas flow path 3. Then, after the drawn hydrogen-containing gas and the raw material are mixed, the mixture is fed to hydrodesulfurizer 2.

At this time, an inside of ejector 4 is formed so that a flow path sectional area of a flowing route of the fed raw material is gradually narrowed from an upstream side. Recycled gas flow path 3 is connected to join the raw material feed path at the position where the flowing pressure of the raw material in ejector 4 is the lowest. The inside of ejector 4 is formed so that a flow path sectional area of a flowing route through which mixture gas of the raw material and the recycled gas (hydrogen-containing gas) flows gradually increases toward a downstream side (hydrodesulfurizer 2).

In this way, the flow velocity of the raw material becomes the highest and the pressure of the raw material becomes the lowest at a junction of the raw material in ejector 4 and the recycled gas. In other words, the flow path sectional area of ejector 4 is designed so that the pressure of the raw material is lower than the pressure on the upstream side of recycled gas flow path 3 in the above-described state. As a result, it is possible to draw the recycled gas into the raw material feed path.

Next, when the hydrogen-containing gas is fed to hydrodesulfurizer 2, the sulfur compound and hydrogen react with each other to become hydrogen sulfide in hydrodesulfurizer 2. Hydrogen sulfide is adsorbed on and removed by a hydrodesulfurization catalyst which is the desulfurization agent of hydrodesulfurizer 2. As described above, until the hydrogen-containing gas is fed to hydrodesulfurizer 2 through recycled gas flow path 3, the sulfur compound is physically adsorbed and removed in hydrodesulfurizer 2.

At this time, a flow rate of the raw material fed to hydrogen generating apparatus 100 varies greatly according to an operating state of hydrogen generating apparatus 100. Specifically, while hydrogen generating apparatus 100 is stably generating the hydrogen-containing gas, the flow rate of the raw material is high. On the other hand, at startup and shutdown of hydrogen generating apparatus 100, the flow rate of the raw material is low.

In a state where hydrogen generating apparatus 100 is stopped after operation (hereinafter referred to as "standby"), a temperature of a portion such as reformer 1 which is hot during the operation drops. As a result, gas in reformer 1 contracts to form negative pressure as compared with atmospheric pressure. The negative pressure in reformer 1 applies a load on a structure of reformer 1 and therefore needs to be prevented. Normally, the raw material is fed to hydrogen generating apparatus 100 to keep pressure in reformer 1. A flow rate of the raw material flowing for pressure keeping during the standby is very low.

In other words, during the standby, if the flow rate of the raw

In other words, during the standby, if the flow rate of the raw material fed to hydrogen generating apparatus 100 is reduced, the flow velocity of the raw material in ejector 4 is reduced. Therefore, it is impossible to reduce the pressure of the raw material by the Venturi effect in ejector 4. As a result, the gas cannot be drawn from recycled gas flow path 3 into ejector 4. Furthermore, in some cases (states), the raw material flows back from ejector 4 into recycled gas flow path 3.

If the raw material flows back, the non-desulfurized raw material from which the sulfur compound is not removed is fed to the device on the downstream side of reformer 1 through recycled gas flow path 3. The sulfur compound is a substance which poisons the catalyst in reformer 1. Furthermore, the sulfur compound poisons the fuel cell which is an example of the device using the hydrogen-containing gas generated by hydrogen generating apparatus 100. As a result, the device such as the fuel cell cannot provide the predetermined performance.

Therefore, in the present example, when the flow rate of the raw material is lower than or equal to a predetermined flow rate, valve 5 provided in recycled gas flow path 3 is closed. In this way, the backflow of the raw material into recycled gas flow path 3 is prevented.

The predetermined flow rate is such a flow rate of the raw material that ejector 4 does not draw the gas from inside recycled gas flow path 3. In other words, it is impossible to draw the gas in recycled gas flow path 3 at the predetermined or lower flow rate of the raw material and therefore valve 5 is closed to prevent the backflow.

The predetermined flow rate is close to the flow rate of the raw material necessary for ejector 4 to draw the gas from inside recycled gas flow path 3. Therefore, if the flow rate of the raw material exceeds the predetermined flow rate, the gas in recycled gas flow path 3 can be drawn into ejector 4.

Hydrogen generating apparatus 100 in the present example operates as described above.

In other words, hydrogen generating apparatus 100 in the present example includes hydrodesulfurizer 2 for reducing the concentration of the sulfur compound contained in the raw material fed from the raw material feed path, and reformer 1 for reforming the raw material discharged from hydrodesulfurizer 2 to generate hydrogen-containing gas. Moreover, hydrogen generating apparatus 100 includes recycled gas flow path 3 for feeding the part of the hydrogen-containing gas discharged from reformer 1 to the raw material feed path, and ejector 4 provided at the junction of the raw material feed path and recycled gas flow path 3 and to draw the hydrogen-containing gas from recycled gas flow path 3 into the raw material feed path. Moreover, hydrogen generating apparatus 100 includes valve 5 provided to recycled gas flow path 3 to close recycled gas flow path 3 when the raw material flowing into ejector 4 is not larger than the predetermined flow rate.

With this structure, valve 5 provided to recycled gas flow path 3 closes recycled gas flow path 3 when the raw material flowing into ejector 4 from the raw material feed path is not larger than the predetermined flow rate. In other words, when the gas cannot flow from recycled gas flow path 3 into ejector 4 because the flow rate of the raw material flowing through the flow of the raw material is low, valve 5 closes recycled gas flow path 3. In this way, the backflow of the raw material from ejector 4 into recycled gas flow path 3 is prevented. As a result, poisoning of the hydrogen generating apparatus and the device disposed on the downstream side of the hydrogen generating apparatus by the sulfur compound is prevented. Moreover, it is possible to achieve hydrogen generating apparatus 100 which is excellent in reliability and can stably operate for a long period.

### SECOND EXEMPLARY EMBODIMENT

A hydrogen generating apparatus in the second exemplary embodiment of the present invention is described below with reference to FIG. 2.

FIG. 2 is a schematic diagram showing an example of the structure of the hydrogen generating apparatus in the second exemplary embodiment of the present invention.

As shown in FIG. 2, hydrogen generating apparatus 200 in the present exemplary embodiment is different from the hydrogen generating apparatus in the first exemplary embodiment in that hydrogen generating apparatus 200 includes controller 6 for controlling opening and closing of valve 5. Other structures and operation are similar to those in the first exemplary embodiment and are not described.

In other words, controller 6 of hydrogen generating apparatus 200 in the present exemplary embodiment carries out such a control as to close valve 5 when the raw material flowing into ejector 4 is not larger than a predetermined flow rate.

Specifically, controller 6 detects a flow rate of the raw material by use of a flowmeter for measuring the flow rate of the raw material flowing into the ejector, for example, and carries out the control to close valve 5 when the flow rate is lower than or equal to the predetermined flow rate. The flow rate of the raw material may be detected based on a rotation speed of a raw material feeder or an operating amount in controlling the raw material feeder. It is only necessary that controller 6 has a control function. For example, controller 6 includes an arithmetic processor (not shown), and a storage unit (not shown) for storing a control program. The arithmetic processor is formed by an MPU (Micro Processing Unit), a CPU (Central Processing Unit), or the like, for example. The storage unit is formed by a memory, for example.

Controller 6 may be formed by single controller 6 for carrying out a centralized control or may be formed by a plurality of controllers for carrying out a decentralized control in cooperation with each other.

In other words, in hydrogen generating apparatus 200 in the present exemplary embodiment, controller 6 carries out the control to close valve 5 when the flow rate of the raw material is lower than or equal to the flow rate necessary for ejector 4 to draw the gas from recycled gas flow path 3. Then, backflow of the gas into recycled gas flow path 3 is stopped.

With this structure, when the raw material flowing into ejector 4 is not larger than the predetermined flow rate, the backflow of the raw material from ejector 4 into recycled gas flow path 3 is prevented. In this way, it is possible to prevent degradation of hydrogen generating apparatus 200 and a device using hydrogen-containing gas generated by hydrogen generating apparatus 200 by a sulfur compound contained in the raw material.

### THIRD EXEMPLARY EMBODIMENT

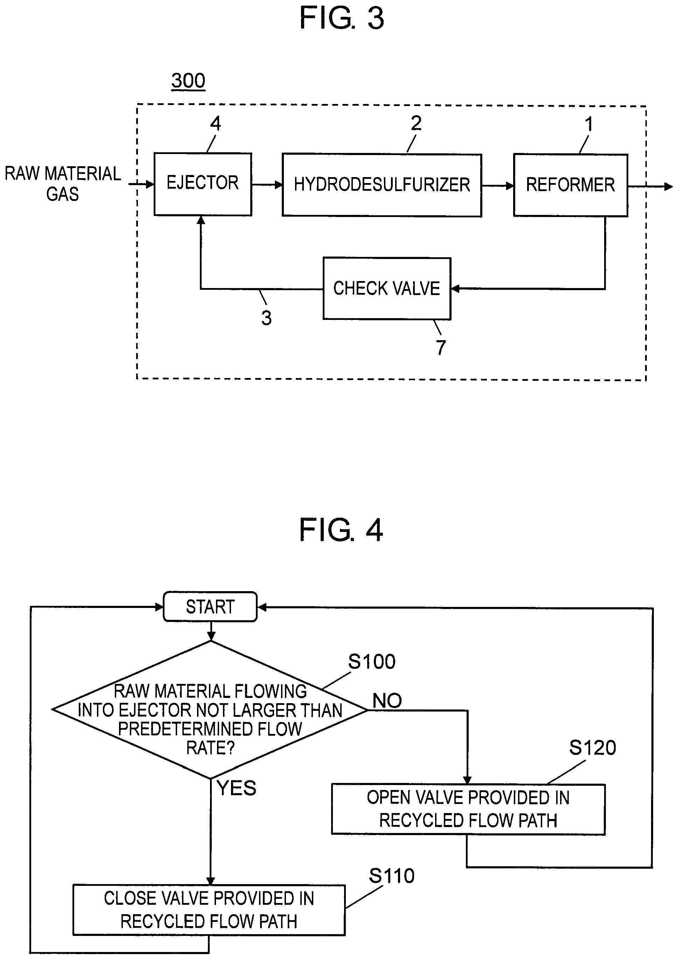

A hydrogen generating apparatus in the third exemplary embodiment of the present invention is described below with reference to FIG. 3.

FIG. 3 is a schematic diagram showing an example of a structure of the hydrogen generating apparatus in the third exemplary embodiment of the present invention.

As shown in FIG. 3, hydrogen generating apparatus 300 in the present exemplary embodiment is different from the hydrogen generating apparatus in the first example in that check valve 7 for closing recycled gas flow path 3 when the raw material flowing into ejector 4 is not larger than a predetermined flow rate is provided. Other structures and operation are similar to those in the first example and are not described.

In other words, check valve 7 of hydrogen generating apparatus 300 in the present exemplary embodiment is provided in recycled gas flow path 3. Check valve 7 restricts a direction of gas flowing through recycled gas flow path 3 to only one direction (a direction from an upstream side to a downstream side). Specifically, check valve 7 allows the gas to flow from recycled gas flow path 3 into ejector 4 but prevents a flow of the gas from ejector 4 into recycled gas flow path 3, which is in an opposite direction.

In this way, backflow of the raw material into recycled gas flow path 3 through ejector 4 is prevented. As a result, it is possible to further reliably prevent poisoning of a device provided on a downstream side of reformer 1 and hydrogen generating apparatus 100 by the non-desulfurized raw material caused by the backflow.

Moreover, by using check valve 7, it is possible to prevent the backflow of the raw material through recycled gas flow path 3 irrespective of the flow rate of the raw material in a raw material feed path.

### FOURTH EXEMPLARY EMBODIMENT

An operating method of a hydrogen generating apparatus in the fourth exemplary embodiment of the present invention is described below with reference to FIG. 4 as well as FIG. 2.

FIG. 4 is a flowchart showing an example of the operating method of the hydrogen generating apparatus in the fourth exemplary embodiment of the present invention.

The hydrogen generating apparatus in the present exemplary embodiment includes valve 5 and controller 6 for controlling opening and closing of valve 5, similarly to hydrogen generating apparatus 200 in the second exemplary embodiment shown in FIG. 2. Controller 6 closes valve 5 when the raw material flowing into ejector 4 is not larger than a predetermined flow rate. Moreover, controller 6 carries out such a control to open valve 5 when the raw material flowing into ejector 4 exceeds the predetermined flow rate.

In other words, in the hydrogen generating apparatus in the present exemplary embodiment, as shown in FIG. 2, reformer 1 first generates hydrogen-containing gas by using the raw material. Then, by using the generated hydrogen-containing gas, hydrodesulfurizer 2 reduces a concentration of a sulfur compound in the raw material by a hydrodesulfurization reaction.

In this way, the hydrogen-containing gas drawn into ejector 4 through recycled gas flow path 3 is fed to the raw material flowing into ejector 4. Then, the raw material and the hydrogen-containing gas are fed from ejector 4 to hydrodesulfurizer 2.

At this time, as shown in FIG. 4, if the raw material flowing into ejector 4 is not larger than the predetermined flow rate necessary to obtain a gas drawing effect by the Venturi effect (YES in step S100), valve 5 provided in recycled gas flow path 3 is closed (step S110). In this way, backflow of the raw material into recycled gas flow path 3 is prevented.

On the other hand, if the raw material flowing into ejector 4 exceeds the predetermined flow rate necessary to obtain the gas drawing effect by the Venturi effect (NO in step S100), valve 5 provided in recycled gas flow path 3 is opened (step S120). In this way, the hydrogen-containing gas flows through recycled gas flow path 3.

In other words, valve 5 is controlled for opening and closing depending on whether the flow rate of the raw material in ejector 4 is such a flow rate that the Venturi effect can be obtained. In this way, the backflow of the raw material into recycled gas flow path 3 is prevented. Then, the hydrogen-containing gas is fed to hydrodesulfurizer 2 through recycled gas flow path 3 and ejector 4.

As a result, poisoning of reformer 1 and a device provided on a downstream side of hydrogen generating apparatus 100 by the sulfur compound is prevented.

The hydrogen generating apparatus in the present exemplary embodiment is operated in the above-described manner.

Although only whether or not the flow rate of the raw material flowing into ejector 4 is not larger than the predetermined flow rate is used as a threshold value for determining timing of opening and closing of valve 5 in the example described in the above-described exemplary embodiment, the present invention is not limited thereto. For example, it is possible to employ a range of flow rate including the predetermined flow rate as the threshold value. Specifically, valve 5 may be opened when the flow rate of the raw material is 5% higher than the predetermined flow rate and valve 5 may be closed when the flow rate of the raw material is not larger than the predetermined flow rate. In this way, it is possible to prevent frequent repetition of opening and closing operations of valve 5. As a result, it is possible to prevent degradation of valve 5 due to increase in the number of times of opening and closing of valve 5 to increase life and reliability. Note that "5%" in the above description is merely an example, and it is needless to say that the invention is not limited thereto.

As described above, when the raw material flowing into ejector 4 is not larger than a predetermined flow rate in hydrodesulfurizer 2 in the hydrogen generating apparatus in the present exemplary embodiment, recycled gas flow path 3 is closed by valve 5. On the other hand, when the raw material flowing into ejector 4 exceeds the predetermined flow rate, recycled gas flow path 3 is opened by valve 5. In this way, the backflow of the non-desulfurized raw material into recycled gas flow path 3 is prevented.

### FIFTH EXEMPLARY EMBODIMENT

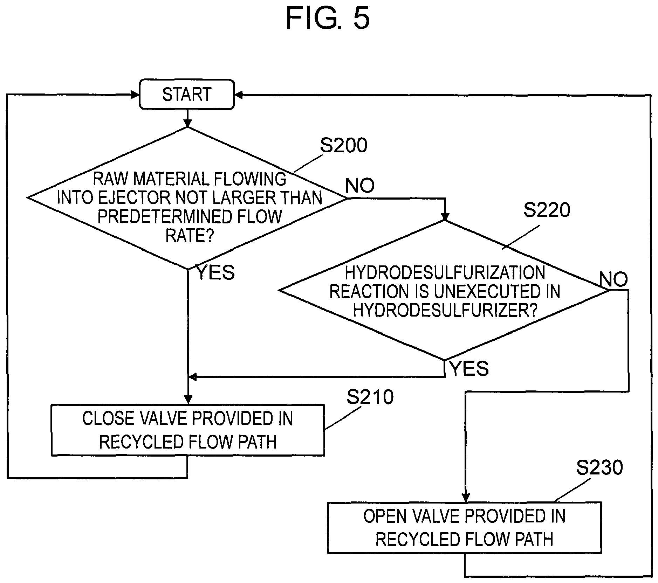

An operating method of a hydrogen generating apparatus in the fifth exemplary embodiment of the present invention is described below with reference to FIG. 5 as well as FIG. 2.

FIG. 5 is a flowchart showing an example of the operating method of the hydrogen generating apparatus in the fifth exemplary embodiment of the present invention.

The hydrogen generating apparatus in the present exemplary embodiment includes valve 5 and controller 6 for controlling opening and closing of valve 5, similarly to hydrogen generating apparatus 200 in the second exemplary embodiment shown in FIG. 2.

Controller 6 closes valve 5 when raw material flowing into ejector 4 is not larger than a predetermined flow rate or when a hydrodesulfurization reaction is unexecuted in hydrodesulfurizer 2. Moreover, controller 6 carries out such a control as to open valve 5 when raw material flowing into ejector 4 exceeds the predetermined flow rate, and the hydrodesulfurization reaction is executed in hydrodesulfurizer 2.

In other words, in the hydrogen generating apparatus in the present exemplary embodiment, as shown in FIG. 2, reformer 1 first generates hydrogen-containing gas by using the raw material. Then, by using the generated hydrogen-containing gas, hydrodesulfurizer 2 reduces a concentration of a sulfur compound in the raw material by the hydrodesulfurization reaction.

In this way, the hydrogen-containing gas drawn into ejector 4 through recycled gas flow path 3 is fed to the raw material flowing into ejector 4. Then, the raw material and the hydrogen-containing gas are fed from ejector 4 to hydrodesulfurizer 2.

At this time, as shown in FIG. 5, if the raw material flowing into ejector 4 is not larger than the predetermined flow rate necessary to obtain the gas drawing effect by the Venturi effect (YES in step S200), valve 5 provided in recycled gas flow path 3 is closed (step S210). In this way, backflow of the raw material into recycled gas flow path 3 is prevented.

On the other hand, if the raw material flowing into ejector 4 exceeds the predetermined flow rate necessary to obtain the gas drawing effect by the Venturi effect (NO in step S200), whether or not the hydrodesulfurization reaction is executed in hydrodesulfurizer 2 (step S220) is determined.

If the hydrodesulfurization reaction is executed in hydrodesulfurizer 2 (NO in step S220), valve 5 provided in recycled gas flow path 3 is opened (step S230). In this way, the hydrogen-containing gas flows through recycled gas flow path 3.

On the other hand, if the hydrodesulfurization reaction is unexecuted in hydrodesulfurizer 2 (YES in step S220), valve 5 is closed to close recycled gas flow path 3 (step S210). In this way, if the hydrogen-containing gas is not necessary in hydrodesulfurizer 2, the hydrogen-containing gas is prevented from flowing through recycled gas flow path 3. As a result, it is possible to reduce a heat radiation amount from the hydrogen-containing gas through recycled gas flow path 3. In other words, by reducing the heat radiation amount, it is possible to reduce an amount of heat for heating the hydrogen generating apparatus. As a result, it is possible to further enhance operation efficiency of the hydrogen generating apparatus.

The hydrogen generating apparatus in the present exemplary embodiment is operated as described above.

Although valve 5 is opened at the same time as the hydrodesulfurization reaction is executed in hydrodesulfurizer 2 in the structure described as an example in the above-described exemplary embodiment, the present invention is not limited thereto. For example, in consideration of a time delay until the hydrogen-containing gas flows through recycled gas flow path 3 and reaches hydrodesulfurizer 2, valve 5 may be opened earlier than carrying out the hydrodesulfurization reaction. In this way, it is possible to efficiently carry out the hydrodesulfurization reaction in hydrodesulfurizer 2.

As described above, in the hydrogen generating apparatus in the present exemplary embodiment, recycled gas flow path 3 is closed by valve 5 when the raw material flowing into ejector 4 is not larger than the predetermined flow rate or when the raw material flowing into ejector 4 exceeds the predetermined flow rate and the hydrodesulfurization reaction is unexecuted in hydrodesulfurizer 2. On the other hand, recycled gas flow path 3 is opened by valve 5 when the raw material flowing into ejector 4 exceeds the predetermined flow rate and the hydrodesulfurization reaction is executed in hydrodesulfurizer 2. In this way, the backflow of the non-desulfurized raw material into recycled gas flow path 3 is prevented. Moreover, it is possible to feed the hydrogen-containing gas through recycled gas flow path 3 only when the hydrogen-containing gas needs to be fed to hydrodesulfurizer 2 for the hydrodesulfurization reaction.

### SIXTH EXEMPLARY EMBODIMENT

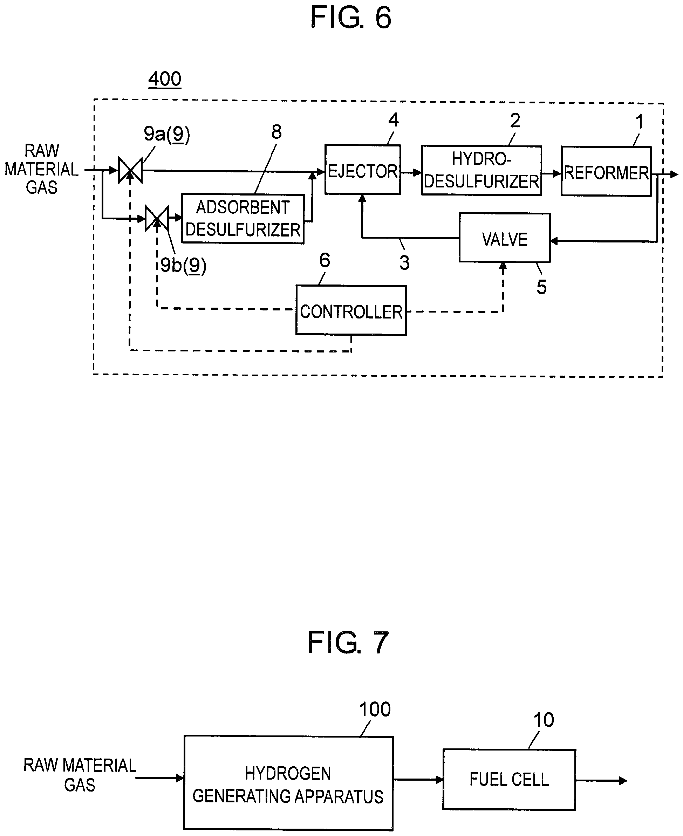

A hydrogen generating apparatus in the sixth exemplary embodiment of the present invention is described below with reference to FIG. 6.

FIG. 6 is a schematic diagram showing an example of a structure of the hydrogen generating apparatus in the sixth exemplary embodiment of the present invention.

As shown in FIG. 6, hydrogen generating apparatus 400 in the present exemplary embodiment is different from hydrogen generating apparatus 200 in the second exemplary embodiment in that hydrogen generating apparatus 400 includes adsorbent desulfurizer 8 and switching valve 9. Other structures and operation are similar to those in the second exemplary embodiment and are not described.

Here, adsorbent desulfurizer 8 is provided to a raw material feed path on an upstream side of ejector 4 to remove a sulfur compound in raw material by adsorption. Switching valve 9 switches a flow of the raw material between a flow path through adsorbent desulfurizer 8 and a flow path bypassing adsorbent desulfurizer 8. In an example described in the present exemplary embodiment, switching valve 9 is formed by two switching valves 9a and 9b.

In other words, controller 6 in hydrogen generating apparatus 400 in the present exemplary embodiment opens switching valve 9b to allow the raw material to flow through adsorbent desulfurizer 8 when valve 5 provided in recycled gas flow path 3 is closed. On the other hand, controller 6 opens switching valve 9a to allow the raw material to flow through the flow path bypassing adsorbent desulfurizer 8 when valve 5 provided in recycled gas flow path 3 is opened.

With this structure, when a hydrodesulfurization reaction cannot be executed in hydrodesulfurizer 2 because the raw material flowing into ejector 4 is not larger than a necessary predetermined flow rate, or when the hydrodesulfurization reaction is unexecuted in hydrodesulfurizer 2, the sulfur compound can be removed by adsorbent desulfurizer 8. In this way, it is possible to reduce a load on hydrodesulfurizer 2.

Adsorbent desulfurizer 8 is a desulfurizer which removes the sulfur compound in the raw material at normal temperature. Here, the normal temperature refers to a temperature closer to a normal temperature zone than a temperature (e.g., around 300°C) at which hydrodesulfurizer 2 is used. In other words, the normal temperature includes temperatures in the normal temperature zone and temperatures at which a zeolitic desulfurization agent, for example, effectively functions as the desulfurization agent. In this case, any desulfurization agent can be used, if the sulfur compound in the raw material can be adsorbed on and removed by the desulfurization agent.

As described above, switching valve 9 is a valve for switching the flow of the raw material between the flow path through adsorbent desulfurizer 8 and the flow path bypassing adsorbent desulfurizer 8. Therefore, switching valve 9 may have any structure, if switching valve 9 can switch the flow path. In other words, as shown in FIG. 6, switching valves 9a and 9b are respectively provided to the route for the raw material through adsorbent desulfurizer 8 and the route of the raw material bypassing adsorbent desulfurizer 8. By closing switching valve 9a and opening switching valve 9b, for example, the flow path is switched to the route through adsorbent desulfurizer 8. Although switching valve 9 is formed by two switching valves 9a and 9b in the example described above, a single three-way valve may be provided to a branch point of the flow paths to switch the flow path. In this way, the structure is simplified and controllability of timing of switching and the like is enhanced.

Normally, if valve 5 provided in recycled gas flow path 3 is closed, hydrogen-containing gas does not flow through recycled gas flow path 3. Therefore, hydrodesulfurizer 2 cannot carry out a hydrogenation reaction.

Therefore, the hydrogen generating apparatus in each of first to fifth exemplary embodiments is formed so that hydrodesulfurizer 2 removes the sulfur compound by physical adsorption, even when the hydrogenation reaction is unexecuted. However, if the sulfur compound is removed by adsorption by hydrodesulfurizer 2, the load on hydrodesulfurizer 2 increases. As a result, durability of hydrodesulfurizer 2 is reduced, and therefore it is necessary to increase an amount of hydrodesulfurization agent placed in hydrodesulfurizer 2. As a result, hydrodesulfurizer 2 may be increased in size.

Therefore, hydrogen generating apparatus 400 in the present exemplary embodiment further includes adsorbent desulfurizer 8. The adsorbent desulfurizer 8 removes the sulfur compound in advance. In this way, influences such as increase in size of hydrodesulfurizer 2 and reduction in the durability are suppressed.

In the above-described exemplary embodiment, valve 5 provided in recycled gas flow path 3 may be closed at the same time as when switching valve 9b allows the raw material to flow through the route passing through adsorbent desulfurizer 8. Furthermore, valve 5 provided in recycled gas flow path 3 may be closed after a predetermined time since switching valve 9b is opened to allow the raw material to flow through adsorbent desulfurizer 8. Here, the predetermined time corresponds to a delay time until the raw material flowing through adsorbent desulfurizer 8 reaches recycled gas flow path 3.

In the above-described exemplary embodiment, valve 5 provided in recycled gas flow path 3 may be opened at the same time as when switching valve 9a is opened to allow the raw material to flow through the route bypassing adsorbent desulfurizer 8. Furthermore, switching valve 9a may be opened to allow the raw material to flow through the route bypassing adsorbent desulfurizer 8 after valve 5 provided in recycled gas flow path 3 is opened.

When valve 5 provided in recycled gas flow path 3 is opened or closed, it is preferable to open or close valve 5 while adsorbent desulfurization is executed after switching valve 9b is opened to allow the raw material to flow through adsorbent desulfurizer 8. In this way, it is possible to effectively remove the sulfur compounds included in the raw material.

### SEVENTH EXEMPLARY EMBODIMENT

A fuel cell system in the seventh exemplary embodiment of the present invention is described below with reference to FIG. 7.

FIG. 7 is a schematic diagram showing an example of a structure of the fuel cell system in the seventh exemplary embodiment of the present invention.

In other words, the fuel cell system in the present exemplary embodiment is formed by at least one of the hydrogen generating apparatuses described in the second to sixth exemplary embodiments and fuel cell 10. In FIG. 7, hydrogen generating apparatus 100 described in the first example is shown as an example.

Fuel cell 10 generates electric power by using hydrogen-containing gas fed from hydrogen generating apparatus 100. As fuel cell 10, a solid polymer fuel cell, a polymer electrolyte fuel cell, a solid oxide fuel cell, a phosphoric acid fuel cell, or the like may be used, for example. However, it is needless to say that fuel cell 10 is not limited to the above-described fuel cells.

The fuel cell system in the present exemplary embodiment generates electric power by using hydrogen-containing gas fed from hydrogen generating apparatus 100 during electric power generating operation.

Operation of hydrogen generating apparatus in the present exemplary embodiment is similar to that of hydrogen generating apparatus described in each of the second to sixth exemplary embodiments and is not described in detail. In other words, fuel cell 10 can be regarded as an example of the device using the hydrogen-containing gas generated from one of the hydrogen generating apparatuses in the first to sixth exemplary embodiments.

With this structure, the fuel cell system in the present exemplary embodiment can use the hydrogen-containing gas generated from one of the hydrogen generating apparatuses in the second to sixth exemplary embodiments as fuel for fuel cell 10 and generate the electric power. In this way, it is possible to prevent degradation due to poisoning of the fuel cell system mounted with hydrodesulfurizer 2 by sulfur. As a result, it is possible to achieve the fuel cell system with enhanced reliability.

### EIGHTH EXEMPLARY EMBODIMENT

An operating method of a hydrogen generating apparatus in the eighth exemplary embodiment of the present invention is described below with reference to FIG. 8 as well as FIG. 2.

FIG. 8 is a flowchart showing an example of the operating method of the hydrogen generating apparatus in the eighth exemplary embodiment of the present invention.

The operating method of the hydrogen generating apparatus in the present exemplary embodiment is the operating method of the hydrogen generating apparatus shown in FIG. 2.

In other words, the hydrogen generating apparatus in the present exemplary embodiment includes hydrodesulfurizer 2, reformer 1, recycled gas flow path 3, ejector 4, and the like. Hydrodesulfurizer 2 reduces a concentration of a sulfur compound contained in raw material fed from a raw material feed path by a hydrodesulfurization reaction. Reformer 1 reforms the raw material discharged from hydrodesulfurizer 2 to generate hydrogen-containing gas. Recycled gas flow path 3 feeds a part of the hydrogen-containing gas discharged from reformer 1 to the raw material feed path. Ejector 4 is provided at a junction of the raw material feed path and recycled gas flow path 3 and draws the hydrogen-containing gas from recycled gas flow path 3 into the raw material feed path. Valve 5 is provided in recycled gas flow path 3 to control feed of the hydrogen-containing gas.

Specifically, valve 5 is controlled to close recycled gas flow path 3 when raw material flowing into ejector 4 is not larger than a predetermined flow rate.

In other words, in the hydrogen generating apparatus in the present exemplary embodiment, as shown in FIG. 8, reformer 1 first generates hydrogen-containing gas by using the raw material. Then, by using the generated hydrogen-containing gas, hydrodesulfurizer 2 removes the sulfur compound in the raw material by adsorption.

In this way, the hydrogen-containing gas drawn into ejector 4 through recycled gas flow path 3 is fed to the raw material flowing into ejector 4. Then, the raw material and the hydrogen-containing gas are fed from ejector 4 to hydrodesulfurizer 2.

At this time, as shown in FIG. 8, if the raw material flowing into ejector 4 is not larger than the predetermined flow rate necessary to obtain the gas drawing effect by the Venturi effect (YES in step S300), valve 5 provided in recycled gas flow path 3 is closed (step S310). In this way, backflow of the raw material into recycled gas flow path 3 is prevented.

In other words, if the raw material flowing into ejector 4 is not larger than the predetermined flow rate (YES in step S300), recycled gas flow path 3 is closed by valve 5 (step S310). In this way, it is possible to prevent backflow of the non-desulfurized raw material into recycled gas flow path 3. In this way, it is possible to prevent the non-desulfurized raw material due to the backflow from poisoning reformer 1 or a device provided on a downstream side of hydrogen generating apparatus.

On the other hand, if the hydrodesulfurization reaction is executed in hydrodesulfurizer 2 (NO in step S300), valve 5 is opened to open recycled gas flow path 3 (step S320). In this way, it is possible to feed the hydrogen-containing gas to hydrodesulfurizer 2 through recycled gas flow path 3.

If the raw material flowing into ejector 4 exceeds the predetermined flow rate (NO in step S300), the backflow of the non-desulfurized raw material into recycled gas flow path 3 does not occur. Therefore, if the raw material flowing into ejector 4 exceeds the predetermined flow rate (NO in step S300), valve 5 is opened to open recycled gas flow path 3 (step S320).

The hydrogen generating apparatus in the present exemplary embodiment is operated in the above-described manner.

As described above, by the operating method of the hydrogen generating apparatus in the present exemplary embodiment, if the hydrodesulfurization reaction is unexecuted in hydrodesulfurizer 2 or if the raw material flowing into ejector 4 is not larger than the predetermined flow rate, recycled gas flow path 3 is closed by valve 5. In this way, it is possible to prevent the backflow of the non-desulfurized raw material into recycled gas flow path 3.

The hydrogen generating apparatus, the operating method of the hydrogen generating apparatus, and the fuel cell system in the present to prevent the backflow of the non-desulfurized raw material into recycled gas flow path 3.

The hydrogen generating apparatus, the operating method of the hydrogen generating apparatus, and the fuel cell system in the present invention are not limited to those in the above-described exemplary embodiments. In other words, it is needless to say that the above-described exemplary embodiments are merely examples and can be changed or combined with each other in various ways without departing from the gist of the present invention as claimed.

Specifically, the hydrodesulfurization reaction is unexecuted when desulfurization by use of a normal-temperature desulfurizer is executed in the structure described as the example in each of the above-described sixth and eighth exemplary embodiments, but the present invention is not limited thereto. For example, a catalyst or an adsorbent stored in the hydrodesulfurizer may have such a function that a sulfur component is adsorbed on the catalyst or the adsorbent. In this case, until an optimum temperature for the hydrodesulfurization reaction is reached, the hydrogen-containing gas is not fed to the hydrodesulfurizer and the hydrodesulfurization reaction is unexecuted temporarily. In this way, when the hydrogen-containing gas is not necessary in the hydrodesulfurizer, the hydrogen-containing gas is prevented from flowing into the recycled gas flow path. As a result, it is possible to reduce a heat radiation amount from the hydrogen-containing gas through the recycled gas flow path.

As described above, the hydrogen generating apparatus in the present invention is defined in claim 1.

With this structure, the valve provided in the recycled gas flow path closes when the raw material flowing into the ejector is not larger than the predetermined flow rate. In other words, if it is impossible to cause the gas to flow from the recycled gas flow path into the ejector because the flow rate of the raw material flowing into the ejector is low and the gas drawing force by the Venturi effect deriving from the flow of the raw material is small, the recycled gas flow path is closed by the valve. In this way, the backflow of the raw material through the recycled gas flow path is prevented.

The hydrogen generating apparatus in the present invention includes the controller for controlling opening and closing of the valve and the controller closes the valve when the raw material flowing into the ejector is not larger than the predetermined flow rate.

With this structure, the controller opens the valve when the raw material flowing into the ejector exceeds the predetermined flow rate. In this way, it is possible to reduce the concentration of the sulfur compound contained in the raw material to be fed to the reformer by the hydrodesulfurization reaction.

In the hydrogen generating apparatus in the present invention, the controller may close the valve provided in the recycled gas flow path when the raw material flowing into the ejector exceeds the predetermined flow rate and the hydrodesulfurization reaction is unexecuted in the hydrodesulfurizer. In this way, the backflow of the non-desulfurized raw material into the recycled gas flow path is prevented. Moreover, it is possible to feed the hydrogen-containing gas through recycled gas flow path 3 only when the hydrogen-containing gas needs to be fed to hydrodesulfurizer 2 for the hydrodesulfurization reaction.

In the hydrogen generating apparatus in the invention, the valve may include the check valve. In this way, it is possible to close the recycled gas flow path irrespective of the flow rate of the raw material flowing into the ejector. As a result, it is possible to more reliably prevent the backflow of the raw material through the recycled gas flow path.

The hydrogen generating apparatus in the present invention may further include the controller, the adsorbent desulfurizer and the switching valve disposed in the raw material feed path on the upstream side of the ejector, and the switching valve may switch the flow of the raw material between the raw material feed path and the adsorbent desulfurizer.

With this structure, if the hydrodesulfurization reaction cannot be executed in the hydrodesulfurizer or if the hydrodesulfurization reaction is unexecuted in hydrodesulfurizer 2, the sulfur compounds can be removed in the adsorbent desulfurizer. In this way, it is possible to reduce the load on hydrodesulfurizer 2.

The fuel cell system in the present inventiont includes the above-described hydrogen generating apparatus and the fuel cell for generating electric power by using the hydrogen-containing gas fed from the hydrogen generating apparatus.

In this way, it is possible to prevent degradation of the fuel cell system mounted with hydrodesulfurizer 2 due to poisoning by sulfur. As a result, it is possible to achieve the fuel cell system with high reliability.

The hydrogen generating apparatus in the present invention includes the hydrodesulfurizer for reducing the concentration of the sulfur compound contained in the raw material fed from the raw material feed path by the hydrodesulfurization reaction, and the reformer for reforming the raw material discharged from the hydrodesulfurizer to generate the hydrogen-containing gas. The operating method of the hydrogen generating apparatus further includes the recycled gas flow path for feeding a part of the hydrogen-containing gas discharged from the reformer to the raw material feed path, the ejector provided at the junction of the raw material feed path and the recycled gas flow path, and configured to draw the hydrogen-containing gas from the recycled gas flow path into the raw material feed path, and the valve provided in the recycled gas flow path. The valve provided in the recycled gas flow path may be closed when the hydrodesulfurization reaction is unexecuted in the hydrodesulfurizer.

In the operating method of the hydrogen generating apparatus in the present invention, the valve may be opened when the raw material flowing into the ejector exceeds the predetermined flow rate.

Moreover, in the operating method of the hydrogen generating apparatus in the present invention, the valve provided in the recycled gas flow path may be closed when the raw material flowing into the ejector exceeds the predetermined flow rate and the hydrodesulfurization reaction is unexecuted in the hydrodesulfurizer.

With this method, the recycled gas flow path may be closed when the hydrodesulfurization reaction is unexecuted in the hydrodesulfurizer. The valve provided in the recycled gas flow path is closed when the raw material flowing into the ejector is not larger the predetermined flow rate.

In this way, it is possible to further reliably prevent the backflow of the non-desulfurized raw material through the recycled gas flow path.

### INDUSTRIAL APPLICABILITY

The present invention prevents the backflow of the non-desulfurized raw material through the recycled gas flow path, and therefore can be applied to the hydrogen generating apparatus including the hydrodesulfurizer of which stable operation is required and to the fuel cell system including the hydrogen generating apparatus.

### REFERENCE MARKS IN THE DRAWINGS

- 1: reformer
- 2: hydrodesulfurizer
- 3: recycled gas flow path
- 4: ejector
- 5: valve
- 6: controller
- 7: check valve
- 8: adsorbent desulfurizer
- 9, 9a, 9b: switching valve
- 10: fuel cell
- 100, 200, 300, 400: hydrogen generating apparatus

## Claims

1. A hydrogen generating apparatus comprising:
a hydrodesulfurizer (2) for reducing a concentration of a sulfur compound contained in raw material fed from a raw material feed path;
a reformer (1) for reforming the raw material discharged from the hydrodesulfurizer (2) to generate hydrogen-containing gas;
a recycled gas flow path (3) for feeding a part of the hydrogen-containing gas discharged from the reformer (1) to the raw material feed path;
an ejector (4) provided at a junction of the raw material feed path and the recycled gas flow path (3), and configured to draw the hydrogen-containing gas from the recycled gas flow path (3) into the raw material feed path; and
a valve (5) provided in the recycled gas flow path,
the hydrogen generating apparatus **characterized by** further comprising a controller (6) for controlling opening and closing of the valve (5),
wherein the controller (6) is configured to close the valve (5) when the raw material flowing into the ejector (4) is not larger than a predetermined flow rate.

2. The hydrogen generating apparatus according to claim 1, wherein the controller (6) is configured to open the valve (5) when the raw material flowing into the ejector (4) exceeds the predetermined flow rate.

3. The hydrogen generating apparatus according to claim 1, wherein the controller (6) is configured to close the valve (5) when the raw material flowing into the ejector (4) exceeds the predetermined flow rate and a hydrodesulfurization reaction is unexecuted in the hydrodesulfurizer (2).

4. The hydrogen generating apparatus according to claim 1, wherein the valve (5) comprises a check valve.

5. The hydrogen generating apparatus according to claim 1 further comprising:
an adsorbent desulfurizer (8); and
a switching valve (9, 9a, 9b),
wherein the adsorbent desulfurizer (8) and the switching valve (9, 9a, 9b) are disposed in the raw material feed path on an upstream side of the ejector (4), and
the controller is configured to control the switching valve (9, 9a, 9b) so as to switch a flow of the raw material between the raw material feed path and the adsorbent desulfurizer (8).

6. A fuel cell system comprising at least:
the hydrogen generating apparatus according to any one of claims 1 to 5; and
a fuel cell (10) for generating electric power by using the hydrogen-containing gas fed from the hydrogen generating apparatus.

7. An operating method of a hydrogen generating apparatus including: a hydrodesulfurizer (2) for reducing a concentration of a sulfur compound contained in raw material fed from a raw material feed path by a hydrodesulfurization reaction; a reformer (1) for reforming the raw material discharged from the hydrodesulfurizer (2) to generate hydrogen-containing gas; a recycled gas flow path (3) for feeding a part of the hydrogen-containing gas discharged from the reformer (1) to the raw material feed path; an ejector (4) provided at a junction of the raw material feed path and the recycled gas flow path (3), and configured to draw the hydrogen-containing gas from the recycled gas flow path (3) into the raw material feed path; and a valve (5) provided in the recycled gas flow path (3),
**characterized in that** the method comprises
closing the valve (5) when the raw material flowing into the ejector (4) is not larger than a predetermined flow rate.

8. The operating method according to claim 7 comprising opening the valve (5) when the raw material flowing into the ejector (4) exceeds a predetermined flow rate.

9. The operating method according to claim 7 comprising closing valve (5) when the raw material flowing into the ejector (4) exceeds the predetermined flow rate and the hydrodesulfurization reaction is unexecuted in the hydrodesulfurizer (2).

## Patentansprüche

1. Wasserstofferzeugungsvorrichtung, umfassend:
einen Hydroentschwefler (2) zum Reduzieren einer Konzentration einer Schwefelverbindung, die in einem Rohmaterial enthalten ist, das aus einer Rohmaterial-Zuführbahn zugeführt wird;
einen Reformer (1) zum Reformieren des Rohmaterials, das aus dem Hydroentschwefler (2) ausgestoßen wird, um wasserstoffhaltiges Gas zu erzeugen;
einen Strömungsweg für rückgeführtes Gas (3) zum Leiten eines Teils des wasserstoffhaltigen Gases, das aus dem Reformer (1) ausgestoßen wird, zu der Rohmaterial-Zuführbahn;
einen Ejektor (4), der an einer Kreuzung der Rohmaterial-Zuführbahn und des Strömungsweges für rückgeführtes Gas (3) angeordnet und dazu ausgelegt ist, das wasserstoffhaltige Gas aus dem Strömungsweg für rückgeführtes Gas (3) in die Rohmaterial-Zuführbahn zu ziehen; und
ein Ventil (5), das in dem Strömungsweg für rückgeführtes Gas angeordnet ist,
wobei die Wasserstofferzeugungsvorrichtung **dadurch gekennzeichnet ist, dass** sie des Weiteren eine Steuerung (6) zum Steuern des Öffnens und Schließens des Ventils (5) umfasst,
wobei die Steuerung (6) dazu ausgelegt ist, das Ventil (5) zu schließen, wenn das in den Ejektor (4) strömende Rohmaterial nicht größer als eine vorgegebene Strömungsrate ist.

2. Wasserstofferzeugungsvorrichtung nach Anspruch 1, wobei die Steuerung (6) dazu ausgelegt ist, das Ventil (5) zu öffnen, wenn das in den Ejektor (4) strömende Rohmaterial die vorgegebene Strömungsrate überschreitet.

3. Wasserstofferzeugungsvorrichtung nach Anspruch 1, wobei die Steuerung (6) dazu ausgelegt ist, das Ventil (5) zu schließen, wenn das in den Ejektor (4) strömende Rohmaterial die vorgegebene Strömungsrate überschreitet und eine Hydroentschwefelungsreaktion in dem Hydroentschwefler (2) nicht ausgeführt wird.

4. Wasserstofferzeugungsvorrichtung nach Anspruch 1, wobei das Ventil (5) ein Rückschlagventil umfasst.

5. Wasserstofferzeugungsvorrichtung nach Anspruch 1, des Weiteren umfassend:
einen adsorbierenden Entschwefler (8); und
ein Schaltventil (9, 9a, 9b),
wobei der adsorbierende Entschwefler (8) und das Schaltventil (9, 9a, 9b) in der Rohmaterial-Zuführbahn auf einer stromaufwärtigen Seite des Ejektors (4) angeordnet sind, und
die Steuerung des Weiteren dazu ausgelegt ist, das Schaltventil (9, 9a, 9b) so zu steuern, dass es einen Strom des Rohmaterials zwischen der Rohmaterial-Zuführbahn und dem adsorbierenden Entschwefler (8) schaltet.

6. Brennstoffzellensystem, umfassend zumindest Folgendes:
die wasserstofferzeugende Vorrichtung nach einem der Ansprüche 1 bis 5; und
eine Brennstoffzelle (10) zum Erzeugen von elektrischem Strom unter Verwendung des wasserstoffhaltigen Gases, das aus der Wasserstofferzeugungsvorrichtung zugeführt wird.

7. Betriebsverfahren für eine Wasserstofferzeugungsvorrichtung, die beinhaltet: einen Hydroentschwefler (2) zum Reduzieren einer Konzentration einer Schwefelverbindung, die in Rohmaterial enthalten ist, das aus einer Rohmaterial-Zuführbahn zugeführt wird, durch eine Hydroentschwefelungsreaktion; einen Reformer (1) zum Reformieren des Rohmaterials, das aus dem Hydroentschwefler (2) ausgestoßen wird, um wasserstoffhaltiges Gas zu erzeugen; einen Strömungsweg für rückgeführtes Gas (3) zum Leiten eines Teils des wasserstoffhaltigen Gases, das aus dem Reformer (1) ausgestoßen wird, zu der Rohmaterial-Zuführbahn; einen Ejektor (4), der an einer Kreuzung der Rohmaterial-Zuführbahn und des Strömungsweges für rückgeführtes Gas (3) angeordnet und dazu ausgelegt ist, das wasserstoffhaltige Gas aus dem Strömungsweg für rückgeführtes Gas (3) in die Rohmaterial-Zuführbahn zu ziehen; und ein Ventil (5), das in dem Strömungsweg für rückgeführtes Gas angeordnet ist,
**dadurch gekennzeichnet, dass** das Verfahren umfasst:
Schließen des Ventils (5), wenn das in den Ejektor (4) strömende Rohmaterial nicht größer als eine vorgegebene Strömungsrate ist.

8. Betriebsverfahren nach Anspruch 7, umfassend das Öffnen des Ventils (5), wenn das in den Ejektor (4) strömende Rohmaterial eine vorgegebene Strömungsrate überschreitet.

9. Betriebsverfahren nach Anspruch 7, umfassend das Schließen des Ventils (5), wenn das in den Ejektor (4) strömende Rohmaterial die vorgegebene Strömungsrate überschreitet und die Hydroentschwefelungsreaktion in dem Hydroentschwefler (2) nicht ausgeführt wird.

## Revendications

1. Appareil de génération d'hydrogène, comprenant :
un hydrodésulfuriseur (2) pour réduire la concentration d'un composé soufré contenu dans une matière brute alimentée par une voie d'alimentation de matière brute ;
un reformeur (1) pour reformer la matière brute déchargée par l'hydrodésulfuriseur (2) afin de générer un gaz contenant de l'hydrogène ;
une voie d'écoulement de gaz recyclé (3) pour alimenter une partie du gaz contenant de l'hydrogène déchargé par le reformeur (1) dans la voie d'alimentation de matière brute ;
un éjecteur (4) pourvu à la jonction de la voie d'alimentation de matière brute et de la voie d'écoulement de gaz recyclé (3), et configuré pour extraire le gaz contenant de l'hydrogène de la voie d'écoulement de gaz recyclé (3) dans la voie d'alimentation de matière brute ; et
une vanne (5) pourvue dans la voie d'écoulement de gaz recyclé,
l'appareil de génération d'hydrogène étant **caractérisé en ce qu'**il comprend en outre un contrôleur (6) pour contrôler l'ouverture et la fermeture de la vanne (5),
dans lequel le contrôleur (6) est configuré pour fermer la vanne (5) quand le débit de matière brute qui s'écoule dans l'éjecteur (4) est inférieur ou égal à un débit prédéterminé.

2. Appareil de génération d'hydrogène selon la revendication 1, dans lequel le contrôleur (6) est configuré pour ouvrir la vanne (5) quand le débit de matière brute qui s'écoule dans l'éjecteur (4) est supérieur au débit prédéterminé.

3. Appareil de génération d'hydrogène selon la revendication 1, dans lequel le contrôleur (6) est configuré pour fermer la vanne (5) quand le débit de matière brute qui s'écoule dans l'éjecteur (4) est supérieur au débit prédéterminé et qu'une réaction d'hydrodésulfurisation n'est pas exécutée dans l'hydrodésulfuriseur (2).

4. Appareil de génération d'hydrogène selon la revendication 1, dans lequel la vanne (5) comprend un clapet antiretour.

5. Appareil de génération d'hydrogène selon la revendication 1, comprenant en outre :
un désulfuriseur à adsorption (8) ; et
une vanne de commutation (9, 9a, 9b),
dans lequel le désulfuriseur à adsorption (8) et la vanne de commutation (9, 9a, 9b) sont disposés dans la voie d'alimentation de matière brute sur un côté amont de l'éjecteur (4), et
le contrôleur est configuré pour contrôler la vanne de commutation (9, 9a, 9b) de manière à commuter un flux de matière brute entre la voie d'alimentation de matière brute et le désulfuriseur à adsorption (8).

6. Système de pile à combustible comprenant au moins :
l'appareil de génération d'hydrogène selon l'une quelconque des revendications 1 à 5 ; et
une pile à combustible (10) pour générer de l'énergie électrique à l'aide du gaz contenant de l'hydrogène alimenté par ledit appareil de génération d'hydrogène.

7. Procédé de fonctionnement d'un appareil de génération d'hydrogène, comprenant : un hydrodésulfuriseur (2) pour réduire la concentration d'un composé soufré contenu dans la matière brute alimentée depuis une voie d'alimentation de matière brute par une réaction d'hydrodésulfurisation ; un reformeur (1) pour reformer la matière brute déchargée par l'hydrodésulfuriseur (2) afin de générer un gaz contenant de l'hydrogène ; une voie d'écoulement de gaz recyclé (3) pour alimenter une partie du gaz contenant de l'hydrogène déchargé par le reformeur (1) dans la voie d'alimentation de matière brute ; un éjecteur (4) pourvu à la jonction de la voie d'alimentation de matière brute et de la voie d'écoulement de gaz recyclé (3), et configuré pour extraire le gaz contenant de l'hydrogène de la voie d'écoulement de gaz recyclé (3) dans la voie d'alimentation de matière brute ; et une vanne (5) pourvue dans la voie d'écoulement de gaz recyclé (3),
**caractérisé en ce que** le procédé comprend
la fermeture de la vanne (5) quand le débit de matière brute qui s'écoule dans l'éjecteur (4) est inférieur ou égal à un débit prédéterminé.

8. Procédé de fonctionnement selon la revendication 7, comprenant l'ouverture de la vanne (5) quand le débit de matière brute qui s'écoule dans l'éjecteur (4) est supérieur à un débit prédéterminé.

9. Procédé de fonctionnement selon la revendication 7, comprenant la fermeture de la vanne (5) quand le débit de matière brute qui s'écoule dans l'éjecteur (4) est supérieur au débit prédéterminé et que la réaction d'hydrodésulfurisation n'est pas exécutée dans l'hydrodésulfuriseur (2).
